Europäisches Patentamt

European Patent Office

Office européen des brevets

(19)

(11) EP 0 779 518 B1

(12) **FASCICULE DE BREVET EUROPEEN**

(45) Date de publication et mention
de la délivrance du brevet:
**14.11.2001 Bulletin 2001/46**

(51) Int Cl.⁷: **G01S 1/04**, H04B 1/707

(21) Numéro de dépôt: **96402653.8**

(22) Date de dépôt: **06.12.1996**

(54) **Procédé et ciruit de réception de signaux de positionnement par satellites avec élimination des erreurs de multitrajets**

Verfahren und Schaltkreis zum Empfang von Satellitenpositionssignalen mit Eliminierung von Mehrwegsignalen

Method and circuit of reception of satellite positioning signals with elimination of multipath errors

(84) Etats contractants désignés:
**DE ES GB IT**

(30) Priorité: **15.12.1995 FR 9514917**

(43) Date de publication de la demande:
**18.06.1997 Bulletin 1997/25**

(73) Titulaire: **THALES AVIONICS S.A.
78141 Vélizy Villacoublay Cédex (FR)**

(72) Inventeurs:
• **Renard, Alain, THOMSON-CSF SCPI
94117 Arcueil Cedex (FR)**

• **Fouilland, Bernard, THOMSON-CSF SCPI
94117 Arcueil Cedex (FR)**

(74) Mandataire: **Guérin, Michel
Thomson-CSF Propriété Intellectuelle,
13, Avenue du Président Salvador Allende
94117 Arcueil Cédex (FR)**

(56) Documents cités:
**DE-A- 3 743 731          US-A- 5 101 416
US-A- 5 347 536**

## Description

L'invention concerne les récepteurs de positionnement par satellite tels que les récepteurs GPS (Global Positionning System).

Le système GPS utilise une constellation de satellites qui tournent autour de la terre sur des orbites très précisément déterminées, c'est-à-dire qu'on peut connaître à tout instant la position d'un satellite quelconque. Les satellites émettent des signaux radiofréquence contenant des données de navigation et des codes qui permettent d'identifier chaque satellite. Ces codes modulent en phase (modulation BPSK) une fréquence porteuse. Un récepteur GPS, au sol ou sur un véhicule terrestre, aérien ou maritime, peut recevoir les signaux de plusieurs satellites simultanément, calculer précisément sa distance à chacun des satellites, et en déduire sa position précise en latitude, longitude, et altitude, dans un repère terrestre. Il peut en déduire aussi la date et l'heure précise de la réception dans le repère temporel du système GPS. Il peut enfin en déduire, par des mesures doppler, son propre vecteur vitesse dans le repère terrestre (cas d'un récepteur monté sur un véhicule mobile).

Dans le système GPS, chaque satellite est identifié par un code pseudo-aléatoire qui lui est propre et qui module de manière répétitive (toutes les millisecondes par exemple) une fréquence porteuse émise par. le satellite. Il existe des systèmes voisins du GPS, notamment le système GLONASS, dans lequel ce code pseudo-aléatoire existe également bien qu'il ne serve pas à identifier un satellite individuel. L'invention qui va être décrite est applicable directement au système GLONASS mais pour plus de simplicité on ne se référera. dans la suite qu'au système GPS, et plus précisément à la partie "civile" du système GPS, lequel comporte aussi une partie militaire à laquelle l'invention est également applicable.

Le code pseudo-aléatoire est un code long (1023 bits à 1,023 MHz, soit 1 milliseconde), et une de ses fonctions principales est de permettre l'extraction du signal du satellite dans un niveau de. bruit beaucoup plus élevé (30 dB par exemple) que le niveau du signal. Cette technique est maintenant bien connue sous le nom d'émission à étalement de spectre. Le signal est extrait du bruit grâce à une opération de corrélation, dans le récepteur, entre le signal reçu et un code pseudo-aléatoire périodique qui est identique à celui que l'on s'attend à trouver dans le signal. Si les codes ne coïncident pas temporellement, il n'y a aucune corrélation entre les signaux reçus et le code local engendré par un générateur de code local; s'ils coïncident presque, il y a une certaine corrélation, l'énergie de corrélation étant d'autant plus forte que la coïncidence est plus exacte. On peut donc établir un signal de corrélation permettant d'asservir un générateur de code local jusqu'à obtenir une coïncidence exacte du code local et du code modulant le signal émis par le satellite. Une boucle d'asservissement de code permet ensuite de maintenir cette coïncidence.

Le code pseudo-aléatoire est émis par le satellite à des instants extrêmement précis et connus au niveau du récepteur. Le repérage de ces instants se fait notamment par rapport à une transition binaire caractéristique (appelée "époque") représentant le début du code pseudo-aléatoire toutes les millisecondes. On se sert de l'opération de corrélation pour déterminer l'instant d'arrivée de ce code dans le récepteur : on détermine l'instant caractéristique ou époque d'émission du code local, et comme ce code local coïncide avec le code reçu lorsque la corrélation maximale est établie, cet instant représente l'instant d'arrivée du code reçu. La différence entre un instant d'émission du code par le satellite et un instant de réception du code par le récepteur permet de déterminer un temps de parcours des signaux entre le satellite et le récepteur. Sachant que la. vitesse de parcours des signaux est la vitesse de la lumière, on peut calculer la distance entre le récepteur et un satellite donné. La même opération faite sur deux autres satellites permet, par triangulation, de déterminer la position exacte du récepteur. Si on utilise un quatrième satellite, on élimine les erreurs d'horloge du récepteur, l'horloge du récepteur n'étant pas aussi précise que celle des satellites. Outre la position du récepteur on peut calculer un temps précis de la mesure de position, dans le repère de temps des satellites GPS.

La précision de la détermination de position repose donc en grande partie sur la précision de détermination de l'instant de réception du code pseudo-aléatoire. Cette précision repose elle-même essentiellement sur la qualité de l'opération de corrélation puisqu'on mesure un instant de réception du code satellite en mesurant l'instant d'émission du code local lorsqu'il est corrélé au mieux avec le code reçu et qu'il est donc supposé en coïncidence parfaite avec le code reçu.

L'opération de corrélation est une simple multiplication entre le signal reçu (transposé à basse fréquence en conservant sa modulation de phase) et le code local produit par un générateur de code local. Si les codes coïncident à moins d'un moment de code près, une certaine énergie de signal de corrélation est fournie. Un moment de code ou "chip" est la durée T qui sépare deux bits successifs (parmi les 1023 bits) du code. A l'intérieur de cet intervalle de temps d'un moment de code 2T, le signal de corrélation est d'autant plus fort que la coïncidence entre les codes est plus précise. Il y a un maximum du signal de corrélation pour une coïncidence exacte entre le code local et le code reçu.

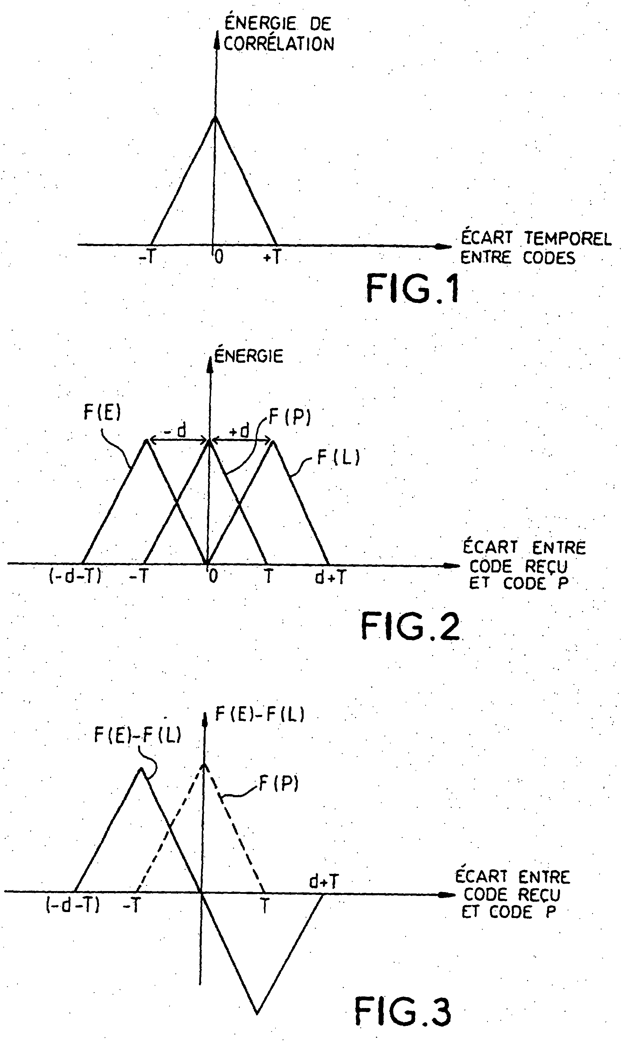

La figure 1 représente la fonction de corrélation théorique entre le code reçu et le code local, c'est-à-dire l'énergie du signal de corrélation en fonction de l'écart temporel entre le code reçu et le code local : elle est nulle si les codes s'écartent de plus d'un moment T en avance ou en retard; elle croît linéairement à mesure que l'écart temporel entre. les codes diminue de - T à zéro et elle redécroît linéairement à mesure que l'écart temporel augmente dans l'autre sens de zéro à +T; elle reste à zéro pour un écart supérieur à T. Dans cette forme de courbe de corrélation triangulaire, le sommet du triangle représente le point de coïncidence exact entre les codes.

On comprendra que cette forme triangulaire est une forme théorique. En réalité, la base et le sommet du triangle sont légèrement arrondis, selon la bande passante plus ou moins limitée des circuits de corrélation. Dans ce qui suit on raisonnera sur les formes théoriques, l'invention se fondant sur une approximation linéaire de ces courbes de corrélation.

L'opération de corrélation consiste donc à faire glisser le code local par rapport au signal reçu du satellite jusqu'à ce que le signal de corrélation soit maximal. Une fois que ce résultat est obtenu, on asservit le générateur de code local pour que le corrélateur continue à produire un pic de corrélation maximal.

En pratique, on ne sait pas bien réaliser un asservissement sur un maximum d'une fonction. On sait beaucoup mieux asservir un signal par rapport à une valeur centrale nulle : si un écart positif se produit on avance la phase du code local et si un écart négatif se produit, on la retarde.

Il est donc préférable d'utiliser des fonctions de corrélation présentant un zéro lorsque la coïncidence des codes est exacte. Il existe plusieurs manières de le faire, notamment à partir de corrélateurs doubles utilisant non seulement le code local, appelé code ponctuel P, qu'on veut faire coïncider avec le code reçu du satellite, mais aussi un code E ("early") qui est en avance de phase d'une courte durée d (inférieure ou égale à un demi-moment T/2) sur le code ponctuel P, et un code L ("late") qui est en retard de la même durée d sur le code ponctuel P.

Si on trace les fonctions de corrélation F(P), F (E), F(L) entre chacun de ces codes P, E, L et le signal reçu du satellite, en prenant pour abscisse l'écart temporel entre le code reçu et le code ponctuel P qu'on veut aligner sur le code reçu, on retrouve le triangle de la figure 1 pour la fonction F(P), et des triangles identiques, mais décalés à gauche et à droite , d'une durée d, pour les fonctions F(E) et F(L).

La figure 2 représente ces fonctions de corrélation dans le cas particulier où la durée d de décalage entre les codes est égale à un demi-moment T/2. L'écart temporel 0 sur l'axe des abscisses représente une coïncidence exacte entre le code reçu et le code local ponctuel P. Ce diagramme peut se lire de la manière suivante pour un écart temporel quelconque, porté sur l'axe des abscisses, on peut lire la valeur de l'énergie de corrélation avec chacun des codes P, E et L en lisant la valeur des fonctions F(P), F(E) et F(L) pour cette valeur d'écart.

Une des manières de créer une fonction de corrélation ayant un zéro lorsque le code ponctuel P coïncide avec le code reçu consiste à établir la fonction de corrélation F(E) du code reçu avec le code avancé E et la fonction de corrélation F(L) du code reçu avec le code retardé L, et à faire la différence F(E)-F(L) entre ces deux fonctions.

La figure 3 représente cette différence en traits pleins, en fonction de l'écart temporel entre le code reçu et le code ponctuel. La fonction de corrélation F(P) avec le code ponctuel est rappelée en traits pointillés. On vérifie que la fonction de corrélation différentielle F(E) - F (L) présente un zéro à l'endroit de la corrélation exacte avec le code ponctuel, et qu'elle est linéaire autour de ce zéro.

Un moyen simple de déterminer et d'asservir le point de corrélation exact avec le code ponctuel est donc de faire la différence des signaux de corrélation F (E) et F(L) et d'asservir le code ponctuel local (les codes E et L étant liés au code P) de telle manière que cette différence F(E)-F(L) reste à zéro.

La figure 2 a été tracée en supposant que le retard du code L et l'avance du code E sont exactement d'un demi-moment de code. La figure 3 correspond également à ce cas. Toutefois, le décalage d peut être inférieur à un demi-moment de code; le zéro reste au même endroit et la linéarité autour du zéro est conservée.

Une autre possibilité de créer une fonction de corrélation ayant un zéro lorsque le code ponctuel coïncide avec le code reçu consiste à créer un code différence E-L (appelé aussi "early-minus-late") à partir des codes E et L, et à faire la corrélation de ce code différence avec le signal reçu du satellite. La fonction. de corrélation F(E-L) qui en résulte est pratiquement identique à la fonction F(E)-F(L) de la figure 3, et dans la suite on considérera que ces solutions sont équivalentes.

On connaît un phénomène susceptible d'affecter la précision de la corrélation et donc la précision de la détermination de durées puis de distances. Il s'agit des multitrajets d'ondes radiofréquence entre le satellite et le récepteur. La distance qu'on cherche à calculer est la distance en ligne de vue directe entre le satellite et le récepteur; mais le signal radio reçu comporte parfois des composantes résultant d'une réflexion sur des surfaces environnantes : réflexion sur une façade d'immeuble, sur des surfaces métalliques d'un navire, etc.

Ces réflexions correspondent à des trajets plus longs entre le satellite et le récepteur, mais pas forcément assez longs pour sortir de la zone de corrélation entre les codes. Typiquement, la zone de corrélation correspond à un moment et demi de code à 1,023 MHz, ce qui correspond à environ 450 m de longueur d'onde, ou à une fraction de moment, ce qui correspond à une centaine de mètres ou quelques dizaines de mètres. Une réflexion d'onde sur un bâtiment peut très bien induire un trajet secondaire d'onde avec une différence de longueur de trajet de plusieurs dizaines de mètres par rapport au trajet en vue directe. Dans ce cas, le signal direct et le signal réfléchi sont mélangés et participent tous deux à la fonction de corrélation, mais avec des instants de coïncidence exacte différents puisqu'ils correspondent à des instants d'arrivée différents du code pseudo-aléatoire envoyé par le satellite.

En pratique, le trajet en ligne directe correspond à un signal plus fort que les trajets réfléchis (qui subissent des pertes au moment de la réflexion ainsi que lors de l'incidence sur l'antenne), de sorte que les trajets réfléchis ont pour effet principal de modifier la forme de la fonction de corrélation : au lieu d'avoir une fonction de corrélation triangulaire symétrique, on peut facilement se rendre compte que la fonction de corrélation est déformée (non triangulaire) et asymétrique.

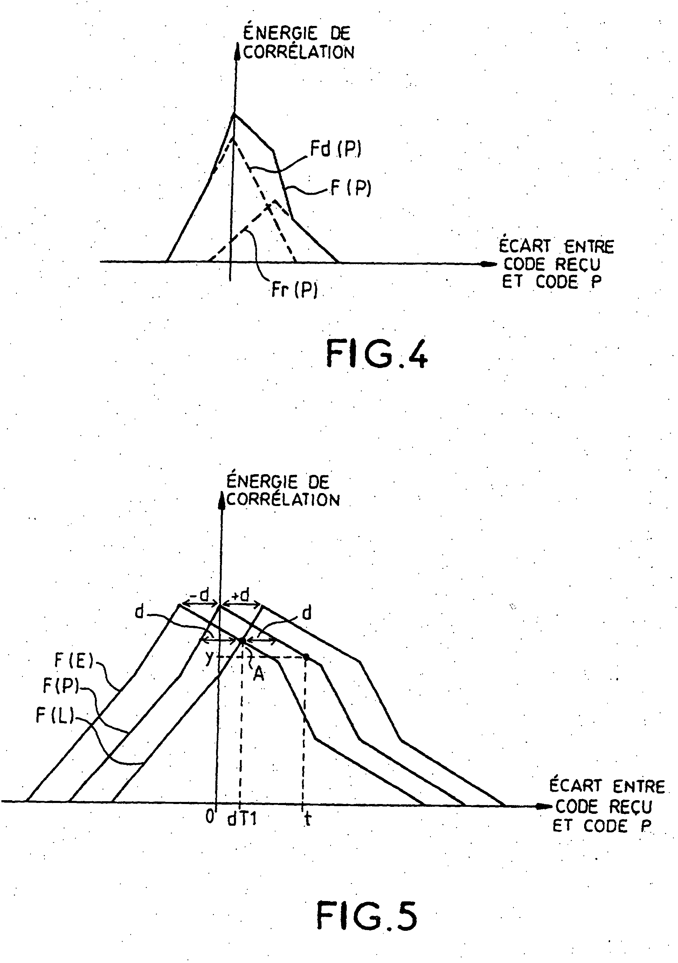

La figure 4 représente une forme typique de fonction de corrélation modifiée par la présence d'une réflexion. La courbe de corrélation F(P), en traits pleins, est tout simplement la somme d'une fonction triangulaire symétrique Fd(P) (en traits pointillés) correspondant au trajet de l'onde en ligne directe et d'une autre fonction triangulaire symétrique Fr(P) de moindre amplitude (également en pointillés), correspondant au trajet réfléchi. Les triangles ont des pics décalés dans le temps puisque les longueurs de trajets sont différentes, et ce qu'on cherche à faire c'est à caler le code local ponctuel sur le pic du triangle principal Fd(P) correspondant au trajet en ligne directe, pour calculer la distance directe entre récepteur et satellite.

Bien entendu, les fonctions de corrélation F(E) et F(L) avec les codes avancé et retardé sont affectées de la même perturbation et ont donc la même forme.

Dans le cas de ces fonctions de corrélation déformées, l'utilisation d'un corrélateur multiple E, L ou P, E-L comme décrit ci-dessus introduit une erreur. En effet, le zéro de la fonction de corrélation différentielle F(E) - F(L) ou F(E-L) ne se situe plus à l'instant pour lequel le code ponctuel coïncide avec le code reçu; il y a un décalage entre ce zéro et le pic de la fonction de corrélation.

Ceci s'explique si on trace les courbes de corrélation par le code P, le code E, et le code L dans le cas de multitrajets où ces courbes ne sont pas triangulaires mais similaires à celles de la figure 4.

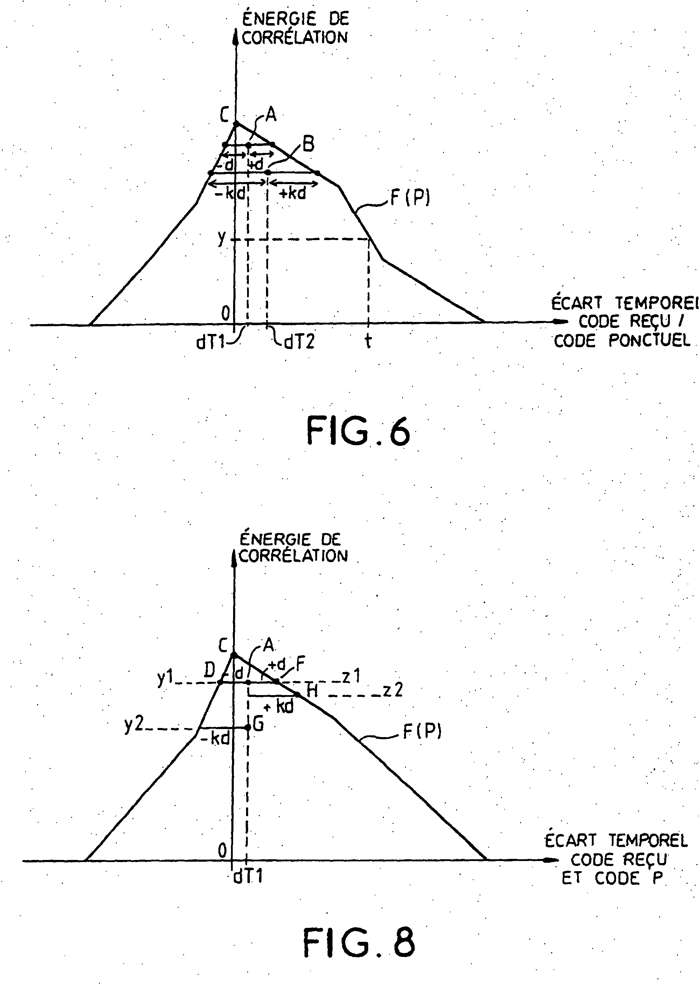

La figure 5 représente ces trois fonctions. Le zéro de la différence F(E) - F(L) correspond au point d'intersection A des fonctions F(L) et F(E). Il n'est pas situé au dessous du pic de corrélation de la fonction F(P). L'erreur est dT1. Cela veut dire que le corrélateur croit avoir asservi le code local ponctuel sur le code du satellite, alors qu'il en est éloigné d'une fraction de moment de code qui peut être importante.

La boude d'asservissement par le corrélateur s'accrochera sur le point A, alors qu'on aurait souhaité qu'elle s'accroche sur le sommet de la fonction F(P). En effet, lorsqu'on calcule une position GPS, on lit à un instant donné l'état de divers signaux numériques de la boude d'asservissement, en faisant l'hypothèse que le code ponctuel P est exactement synchrone du code reçu du satellite, et, en fonction de ces signaux, on calcule un temps T1 correspondant à l'instant de lecture. Or le code ponctuel n'est pas synchrone du code reçu; il est décalé d'un intervalle de temps dT1 par rapport au code reçu. Le calcul du temps reçu T1 est entaché d'une erreur dT1; la vraie valeur de temps intéressante est T0 = T1 - dT1, mais on ne connaît pas l'erreur dT1 qui dépend des réflexions multiples.

Cette erreur sur la détermination du temps peut engendrer une erreur de positionnement de plusieurs dizaines de mètres au moins lorsque le récepteur calcule sa position à partir du code local ponctuel supposé synchronisé avec le code satellite. Cette erreur n'est pas acceptable dans un grand nombre d'applications, particulièrement dans le cas de mesure statique de positions très précises. Pour les récepteurs en mouvement, les déformations de courbe de corrélation varient périodiquement et un lissage élimine cette source d'erreur.

La présente invention repose en partie sur l'observation que le pic de la fonction de corrélation déformée F(P) est situé au même endroit que le pic de la fonction de corrélation triangulaire Fd(P) correspondant au trajet en ligne directe, dès lors que les trajets réfléchis ont une amplitude plus faible que le trajet direct et qu'il n'y a pas plusieurs trajets réfléchis arrivant sur le récepteur avec des amplitudes importantes et avec exactement la même phase.

Selon l'invention, on propose un moyen simple pour réduire alors considérablement l'influence néfaste des multitrajets, et l'éliminer parfois complètement. Le procédé selon l'invention ne nécessite pas de rechercher par essais successifs la présence de trajets secondaires pour les soustraire ensuite de la fonction de corrélation, ce qui serait une opération complexe et longue.

On propose donc un procédé d'élimination de l'influence des multitrajets dans un récepteur de positionnement par satellite, dans lequel on utilise une corrélation à l'aide d'au moins quatre codes pseudo-aléatoires E1, L1, E2, L2, répliques d'un code reçu d'un satellite, les codes E1 et L1 étant respectivement en avance et en retard d'une durée d par rapport à un code ponctuel P1 et les codes E2 et L2 étant respectivement en avance et en retard d'une durée k.d par rapport à un code ponctuel P2, k étant différent de 1 et différent de zéro, caractérisé en ce que, en. vue de déduire la position du récepteur à partir de la position temporelle du code reçu sans erreur due aux multitrajets, on effectue. des mesures d'énergies de corrélation et d'au moins un temps reçu, d'une part avec les codes répliques E1, L1, avancé et retardé de d, d'autre part avec les codes répliques E2, L2, avancé et retardé de k.d, et on effectue à partir de ces deux ensembles de mesures, par un simple calcul d'extrapolation, le calcul de la position temporelle correspondant à k = 0, qui définit la position temporelle du code reçu.

En d'autre mots, l'invention part de la remarque que si on connaît les énergies de corrélation entre le code reçu et les codes E1, E2, L1, L2, c'est-à-dire avec deux retards différents d et k.d, on peut calculer par simple extrapolation le sommet de la courbe de corrélation. Avec un retard d, on peut connaître deux points de la courbe de corrélation; avec un retard k.d, on en connaît deux autres. Ces quatre points définissent deux segments, l'un à gauche du pic, avec une première pente d'inclinaison, l'autre à droite, avec une autre pente, et l'extrapolation de ces segments vers le haut donne le sommet du pic (qui correspond à l'extrapolation k = 0).

En d'autre mots encore, cela signifie que si on accroche une boucle d'asservissement sur une position temporelle erronée à l'aide d'une corrélation par des codes E1, L1 espacés de 2d, on obtiendra une mesure de temps T1 avec une erreur de temps dT1 inconnue, mais si on complète cette mesure de temps par des mesures faites à partir de codes E2, L2 ayant un autre espacement, c'est-à-dire espacés de 2k.d avec k différent de 1 et de zéro, on a deux ensembles de mesure permettant de trouver par une simple extrapolation la position exacte du pic de corrélation qui correspond à une valeur k égale à zéro.

On déduit donc de deux ensembles de mesure, par simple extrapolation et non pas par approximations successives ou par tâtonnements empiriques, quel est le point où s'accrocheraient les boucles d'asservissement s'il n'y avait pas de multitrajets.

Deux modes de mise en principaux peuvent être utilisés : dans un premier mode, les codes P1 et P2 sont indépendants l'un de l'autre ; on crée deux asservissements indépendants pour les codes E1, L1 (écartement temporel 2d) et pour les codes E2, L2 (écartement 2k.d), fournissant respectivement des calculs de temps T1 et T2, et on détermine le temps T0 correspondant à k = 0 par la formule d'extrapolation suivante :

$$T0=(kT1-T2)/(k-1)$$

Ce mode de mise en oeuvre peut utiliser deux canaux d'asservissement numériques fonctionnant simultanément en parallèle, ou bien un seul canal multiplexé dans le temps, en tenant compte, dans ce dernier cas, du fait que les mesures ne sont pas faites au même moment et qu'il faut donc déduire du calcul de temps le temps qui sépare les deux mesures.

L'autre mode de mise en oeuvre principal utilise une seule boucle d'asservissement (les codes ponctuels P1 et P2 sont confondus), avec les codes E1 et L1, permettant de calculer un temps T1 affecté d'une erreur, et une mesure d'énergies de corrélation y1, z1, y2, z2 entre le code reçu et respectivement les codes E1, L1 (avance et retard de d) et E2, L2 (avance et retard de k.d). On calcule le temps T1 et on détermine le temps T0 correspondant à l'extrapolation k = 0 par la formule d'extrapolation suivante :

$$T0 - T1 - d(y2 - z2)/(y1 + z1 - y2 - z2)$$

Les grandes lignes du procédé selon l'invention ayant ainsi été définies, on notera que l'objet de l'invention est également un récepteur de positionnement par satellite qui comprend des moyens pour générer quatre codes pseudo-aléatoires E1, L1, E2, L2, répliques d'un code reçu d'un satellite, les codes E1 et L1 étant respectivement en avance et en retard d'une durée d sur un code ponctuel P1 et les codes E2 et L2 étant respectivement en avance et en retard d'une durée k.d par rapport à un code ponctuel P2, k différent de 1 et de 0, caractérisé en ce qu'il comporte en outre des moyens de corrélation entre le code reçu et les codes répliques, des moyens de mesure d'énergies de corrélation et d'au moins un temps reçu, ces moyens utilisant d'une part les codes répliques E1 et L1, d'autre part les codes répliques E2 et L2, et des moyens pour effectuer à partir de ces deux ensembles de mesures un calcul par simple extrapolation d'une position temporelle correspondant à k = 0, qui définit la position temporelle du code reçu.

D'autres caractéristiques et avantages de l'invention apparaîtront à la lecture de la description détaillée qui suit et qui est faite en référence aux dessins annexés dans lesquels :

- les figures 1 à 3 déjà décrites sont des diagrammes de fonctions de corrélation expliquant le principe de. l'accrochage d'une boucle d'asservissement du code local ponctuel sur le code reçu du satellite;
- les figures 4 et 5, également déjà décrites, expliquent l'erreur de mesure de temps résultant de la présence de multitrajets;
- la figure 6 représente, sous forme d'un diagramme d'énergies de corrélation en présence de multitrajets, le principe sur lequel repose l'invention;
- la figure 7 représente une première mise en oeuvre de l'invention;
- la figure 8 représente un diagramme explicatif pour une deuxième mise en oeuvre;
- la figure 9 représente cette deuxième mise en oeuvre.

Si on revient à la figure 5, on peut remarquer qu'il n'est pas nécessaire de représenter les fonctions de corrélation des codes avancé et retardé F(E) et F(L) : on remarque en effet que le point d'accrochage A pour lequel les fonctions F(E) et F(L) sont égales est situé à équidistance des deux côtés de la courbe F(P), et plus précisément il est situé à la distance d correspondant à l'écart temporel entre le code ponctuel et les deux autres codes. On peut donc représenter directement le point d'accrochage A comme le point distant de d des deux côtés de la fonction F(P), sans tracer les fonctions F(E) et F(L).

Dans ce cas, en supposant la boucle d'asservissement accrochée sur le point A, d'abscisse dT1, un point quelconque d'abscisse t et d'ordonnée y de la fonction F(P) représente la mesure de l'énergie de corrélation y entre le code reçu et un code réplique en retard de t-dT1 sur le code reçu. On peut donc représenter les énergies de corrélation des codes avancés et retardés à partir de la seule courbe F(P).

Comme on l'a dit précédemment, on considérera que la corrélation se fait par calcul de la différence F(E) - F(L) en asservissant cette différence à zéro, étant entendu qu'on pourrait d'une manière équivalente utiliser une corrélation F(E-L) par le code différence E-L, ou même encore d'autres corrélations par différence.

Il en résulte que si on utilise deux ensembles de codes de corrélation avec deux écarts temporels différents d et k.d, k étant un coefficient quelconque, on trouve deux points d'accrochage différents A et B correspondant à deux erreurs de temps dT1 et dT2 différentes dues aux multitrajets.

La figure 6 représente ces deux points d'accrochage A et B. Et l'originalité de l'invention réside dans le fait qu'on déduit directement de ces deux points, par un simple calcul d'extrapolation, un troisième point C qui correspond à k = 0 pour lequel l'erreur de temps est nulle et qui représente donc le temps exact recherché, c'est-à-dire le sommet de la fonction de corrélation F(P). Le point C est aligné avec les points A et B.

Plus généralement, on peut remarquer alors que si on connaît :

- d'une part les abscisses (mesure de temps) et ordonnées (mesures d'énergie) de deux points proches du sommet C, à gauche de ce sommet,
- et d'autre part les abscisses (mesure de temps) et ordonnées (mesure d'énergie) de deux points proches du sommet C et à droite de ce sommet, alors on peut calculer la position temporelle du sommet C par simple extrapolation des deux segments de droite définis par ces points.

Dans une première réalisation de l'invention, on a deux boucles d'asservissement indépendantes. L'une fonctionne avec des codes E1 et L1 avancé et retardé respectivement d'un retard d; elle utilise. des fonctions de corrélation F(E1) et F(L1). Elle permet de calculer à un instant de mesure donné un temps reçu correspondant au point A de la figure 6, la boucle étant accrochée sur ce point. Le temps calculé est un temps T1. L'erreur due aux multitrajets est une valeur inconnue dT1, ce qui signifie que le temps recherché est T0 = T1 - dT1.

L'autre boucle fonctionne avec des codes E2 et L2 avancés et retardés d'un retard k.d. Le coefficient k est quelconque mais différent de 0 et 1. Le point d'accrochage de la boucle est le point B. Cette deuxième boucle permet de calculer un temps reçu T2 correspondant au point d'accrochage de la boucle. Les instants d'échantillonnage de données servant au calcul des temps sont simultanés dans les deux boucles pour que la comparaison des temps T1 et T2 ait un sens. S'ils ne sont pas simultanés on calcule un temps T2 et pour trouver T2 on retranche de T2 l'intervalle de temps qui sépare la mesure dans la première boude de la mesure dans la deuxième boude. On peut donc également travailler en multiplexage avec une seule boucle utilisant alternativement les codes E1, L1 puis les codes E2, L2, à condition que l'intervalle de temps séparant les instants de calcul pour le retard d et pour le retard k.d soit parfaitement connu : il peut alors être soustrait pour revenir aux mêmes conditions que si l'échantillonnage se faisait simultanément dans deux boucles distinctes.

L'erreur de calcul sur T2, pour un retard/avance k.d est dT2 et le temps recherché est donc T0 = T2 - dT2. L'erreur pour k=1 est dT1; et l'erreur varie linéairement avec k. Donc dT2/dT1 = k.

Connaissant le temps T1, le temps T2 ramené au même instant de mesure et le coefficient k, on en déduit donc par extrapolation directe le temps T0 qui correspond au signal reçu en vision directe du satellite sans multitrajets. La formule d'extrapolation est :

$$T0 = (kT1 - T2)/(k - 1)$$

Il s'agit donc d'une formule extrêmement simple notamment pour des valeurs remarquables de k (k = 2 par exemple).

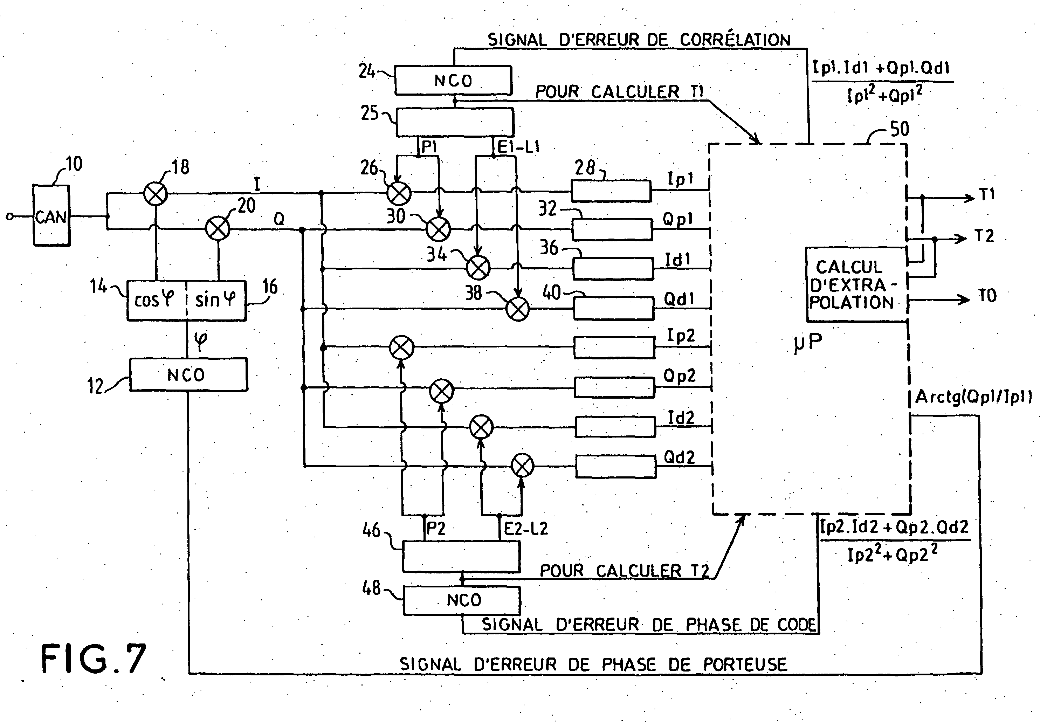

La figure 7 représente le circuit correspondant dans une version avec deux boucles d'asservissement sans multiplexage.

On n'a pas représenté les circuits radiofréquence nécessaires à la réception et à la transposition de fréquence des signaux des satellites. Les signaux transposés classiquement sont numérisés par un convertisseur analogique numérique 10 et sont appliqués à un circuit de traitement numérique de signal, comportant autant de canaux de traitement qu'on veut recevoir de satellites à la fois. Dans le cas d'un traitement multiplexé, les satellites peuvent être traités successivement par un même canal. Un seul canal est représenté sur la figure 7.

Le canal comporte classiquement une double boucle d'asservissement : asservissement de phase de porteuse et asservissement de phase de code. Cette dernière est celle qui est utilisée dans l'invention et qui est elle-même dupliquée dans ce mode de réalisation. La boucle de phase de porteuse n'a pas besoin d'être dupliquée mais peut l'être si c'est plus commode pour des raisons pratiques.

La boucle de phase de porteuse utilise essentiellement un oscillateur local 12 à contrôle numérique de phase, fournissant une phase numérique périodique (en dent de scie) à une fréquence correspondant à la fréquence de porteuse transposée, en tenant compte de l'effet doppler qui affecte la fréquence de porteuse transmise par un satellite. L'effet doppler est pris en compte du fait même de l'existence des boucles d'asservissement.

Cette phase numérique est transformée en deux signaux périodiques sinusoïdaux en phase et en quadrature de phase par des circuits 14, 16 établissant le cosinus et le sinus de cette phase. Des multiplieurs 18, 20 permettent de multiplier par ces fonctions sinusoïdales le signal reçu du satellite (transposé en basse fréquence et conservant sa modulation de phase représentant le code pseudo-aléatoire émis par le satellite avec d'autres données de modulation).

Le signal ainsi multiplié par une fonction sinusoïdale sur deux voies, en phase (voie I) et en quadrature de phase (voie Q), est corrélé avec des codes pseudo-aléatoires produits localement, afin de constituer les boucles d'asservissement de code permettant d'asservir les codes locaux sur le code reçu du satellite et pouvoir ensuite déterminer la position temporelle exacte des codes locaux ainsi asservis.

La première boucle d'asservissement comporte un générateur de code 22, piloté par un oscillateur 24 à contrôle numérique de phase recevant lui-même un signal d'asservissement de phase de code.

Le générateur de code 22 peut produire deux codes E1 et L1 avancés et retardés de d par rapport à un code ponctuel P1. Il peut aussi produire un code P1 et un code E1-L1, et c'est ce dernier cas qui est représenté.

La voie en phase I est multipliée par le code P1 dans un multiplieur numérique 26 puis intégrée (intégrateur 28 du type "integre-and-dump" qui est lu toutes les millisecondes et remis à zéro à ce moment). La sortie de l'intégrateur 28 représente un niveau de signal de corrélation Ip1 correspondant à la voie en phase corrélée par le code ponctuel P1.

De même, à l'aide de multiplieurs 30, 34, 38 et d'intégrateurs 32, 36, 40, on produit des signaux de corrélation suivants:

- Qp1, voie en quadrature corrélée par le code différence E1-L1;
- Id1, voie en phase corrélée par le code P1;
- Qd1, voie en quadrature corrélée par le code E1-L1.

Classiquement, ces signaux de corrélation servent au calcul d'un signal d'erreur de corrélation. Le calcul est fait dans un circuit de calcul qui est en pratique un microprocesseur 50 qui contrôle l'ensemble du circuit de traitement de signal et qui fait les calculs de temps et position GPS. Le signal d'erreur de corrélation est de préférence obtenu par le produit scalaire des deux vecteurs corrélés Ip1, Qp1, et Id1, Qd1, avec un terme de normalisation $Ip1^2 + Qp1^2$ correspondant au fait que les énergies des signaux reçus varient dans le temps.

Le signal d'erreur est donc de la forme

$$(Ip1.Id1 + Qp1.Qd1)/(Ip1^2 + Qp1^2)$$

Ce signal d'erreur est appliqué à l'oscillateur 24 qui pilote le générateur de code 22. Ce signal d'erreur comporte un zéro lorsque les énergies de corrélation par les codes E1 et L1 sont égales. La boucle d'asservissement s'accroche donc sur le point A de la figure 6. Comme on l'a signalé précédemment, plutôt qu'une corrélation par le code différence (E1-L1) on peut utiliser la différence des énergies de corrélation F(E1) et F(L1) pour produire le signal d'erreur de la boucle d'asservissement de code.

Le calcul du temps GPS reçu T1 est fait classiquement en lisant, à un instant d'échantillonnage déterminé, un certain nombre de registres du circuit de traitement de signal, et notamment l'état de la phase du code ponctuel P1, déterminé en pratique par l'état de la sortie de l'oscillateur à phase numérique 24.

Un autre calcul est fait parallèlement pour fournir un signal d'erreur de phase de porteuse qui va contrôler l'oscillateur numérique 12. Ce calcul repose classiquement sur l'évaluation de Arctg(Qp1/Ip1).

La deuxième boucle d'asservissement de phase de code, indépendante de la première, utilise un autre générateur de code pseudo-aléatoire 46 commandé par un oscillateur à commande numérique de phase 48. Le générateur produit des codes E2 et L2 espacés de k.d par rapport à un code ponctuel P2 produit par le générateur, ou encore, comme précédemment, un code P2 et un code E2-L2. Le code P2 est identique au code P1 mais comme les boucles d'asservissement sont indépendantes, il n'est pas synchrone du code P1 (sauf en l'absence de multitrajets).

La deuxième boucle est identique à la première; elle reçoit les signaux numériques de sortie des multiplieurs 18 et 20, c'est-à-dire les signaux du satellite après transposition en fréquence, conversion analogique numérique et multiplication par le sinus et le cosinus de la fréquence porteuse transposée reconstituée par l'oscillateur 12. Toutefois, il serait possible de dédoubler également les éléments 12, 14, 16, 18, 20 pour rendre complètement indépendantes les deux boucles non seulement pour l'asservissement de code mais aussi pour l'asservissement de phase de porteuse.

La deuxième boucle produit des signaux Ip2, Qp2, Id2, Qd2 et un signal d'erreur $(Ip2.Id2 + Qp2.Qd2)/(Ip2^2 + Qp2^2)$. Elle s'accroche sur le point B de la figure 6, pour lequel les énergies de corrélation avance et retard sont identiques.

L'échantillonnage des registres et notamment de la sortie de phase de l'oscillateur 48 se fait au même instant que celui de la première boucle. Il permet de calculer un temps GPS T2 qui est différent du temps T1 s'il y a des multitrajets.

Ce calcul, de même que celui du temps T1, est fait par le microprocesseur 50 qui gère les calculs de point PVT (position, vitesse, temps) du récepteur GPS.

Le calcul de T1 et de T2 permet ensuite de calculer par extrapolation le temps T0 qui permet de calculer la véritable position GPS dépourvue de l'erreur due aux multitrajets.

Un inconvénient du schéma de la figure 7 est la nécessité d'utiliser pratiquement deux canaux de traitement de signal numérique pour une détermination relative à un seul satellite. Cet inconvénient peut être corrigé de deux manières. La première consiste, comme on l'a mentionné plus haut à travailler en mode multiplexé dans le temps, avec successivement deux retards d et k.d produits par le générateur de code 22. Cela nécessite d'avoir un intervalle de temps te2 - te1 très bien connu entre l'instant te1 où on lit les registres après accrochage de la boucle sur le retard d et l'instant te2 où on lit les registres après accrochage sur le retard k.d. Le calcul de T0 prend en compte cet intervalle de temps pour effectuer l'extrapolation : la première mesure fournit un temps T1 ; la deuxième fournit un temps T2 ; le temps T2 est ramené à un temps T2 par la formule :

$$T2 = T'2 - (te2 - te1)$$

Une autre manière consiste à faire des calculs d'énergie de corrélation simultanément avec des codes P, E1, L1, E2, L2, seuls les codes E1, L1 (retard d) servant à asservir la boucle, les autres codes servant seulement à calculer des énergies de corrélation.

L'extrapolation consiste alors à trouver la position temporelle du point d'intersection de deux segments de droite définis par quatre couples énergies de corrélation/écart temporel correspondant.

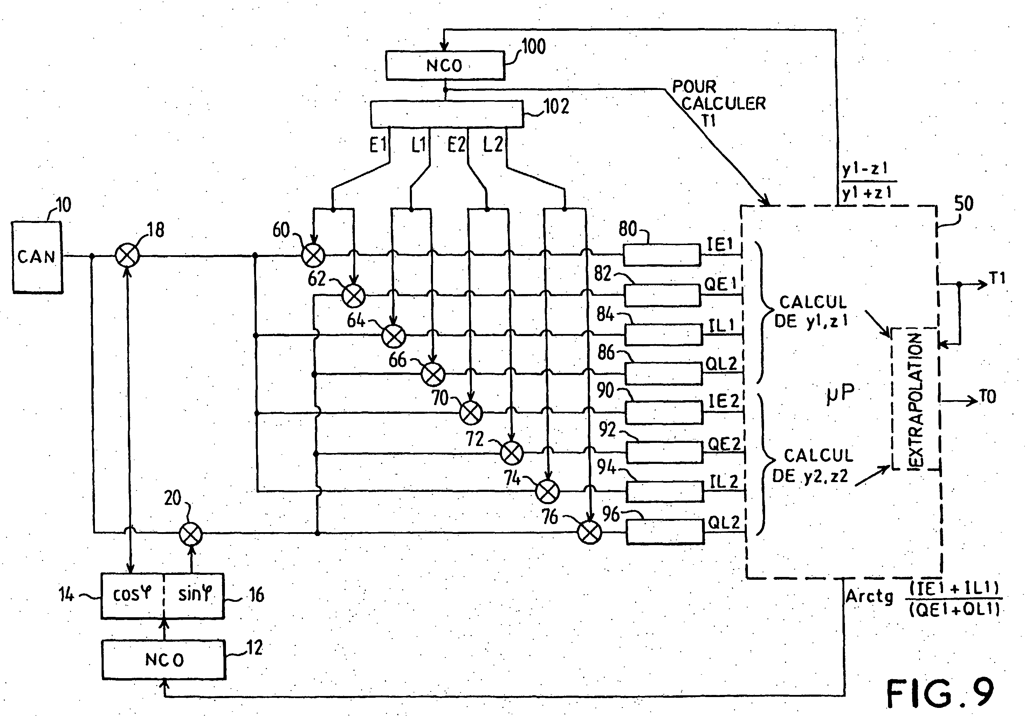

Ceci va être expliqué d'abord en référence au diagramme de la figure 8 avant de décrire le schéma de réalisation qui lui correspond.

Sur la figure 8, on a représenté encore l'énergie de corrélation entre le signal reçu et le code ponctuel local P, en fonction de l'écart temporel entre le code présent dans le signal reçu et le code ponctuel P. Si on produit des codes avancés E1 et E2 (avec des avances d et k.d respectivement), et des codes retardés L1 et L2 (avec des retards d et k.d respectivement), et si on asservit la boucle de corrélation de code de telle manière que l'énergie de corrélation y1 = F(E1) soit égale à l'énergie de corrélation z1 = F(L1), la position prise par l'asservissement est le point A de la figure 8, d'ordonnée y1 = z1, et d'abscisse dT1 situé à distance égale d d'un point D de la partie avance et d'un point F de la partie retard de la courbe de corrélation. La boucle de corrélation fournit une mesure de l'ordonnée y1 du point D, et de l'ordonnée z1 du point F, et permet de fournir une mesure de temps T1 calée sur l'abscisse dT1. Les abscisses des points D et F sont dT1 - d et dT1 + d respectivement.

Le code ponctuel est localisé à dT1 lorsque l'asservissement est établi.

On peut alors, sans utiliser une deuxième boucle de corrélation fermée, créer un code retardé de k.d (abscisse dT1 + k.d) par rapport au code ponctuel, et un code avancé de k.d, (abscisse dT1 - kd) et mesurer l'énergie de corrélation entre le code reçu et ces codes retardés et avancées. Cela revient sur la figure 8 à chercher :

- le point G d'abscisse (dT1 - k.d) et à mesurer l'énergie de corrélation y2 en ce point;
- le point H d'abscisse (dT1 + k) et à mesurer l'énergie de corrélation z2 en ce point.

La formule d'extrapolation consiste simplement, connaissant les énergies y1, z1, y2, z2, et une mesure de temps T1 calée par rapport au point d'accrochage A, à calculer le temps T0 correspondant au pic de corrélation. Le pic est à l'intersection des segments DG et FH extrapolés. La formule est la suivante :

$$T0 = T1 - d(y2 - z2)/(y1 + z1 - y2 - z2)$$

Le schéma de la figure 9 permet de réaliser l'invention selon cette variante de mode de mesure qui fait appel à un seul asservissement de boucle de code et à quatre mesures d'énergie de corrélation différentes avec des avances et retards différents.

La reconstitution de porteuse en phase et en quadrature de phase est faite comme à la figure 7 à partir d'un oscillateur local 12 générant une phase de porteuse variant linéairement en dent de scie, d'un calcul de sinus et cosinus (14, 16) de cette phase, et de multiplicateurs 18, 20 recevant d'une part le signal numérique du satellite issu du convertisseur 10, et d'autre part le sinus ou le cosinus de la phase de porteuse.

Les voies sinus et cosinus ainsi établies sont corrélées, par des multiplicateurs 60, 62, 64, 66, 70, 72, 74, 76, respectivement avec un code avancé E1 (avance d par rapport à un code ponctuel P), un code retardé L1 (retard d), un code avancé E2 (avance k.d), et un code retardé L2 (retard k.d).

Les sorties des multiplieurs sont intégrés par des intégrateurs respectifs 80 à 86 et 90 à 96 respectivement (du type "integre and dump"), et fournissent les signaux de corrélation suivants :

IE1, IL1, IE2, IL2 sur la voie cosinus, et QE1, QL1, QE2, QL2 sur la voie sinus.

Les énergies de corrélation sont obtenues par calcul du module du vecteur I,Q : par exemple, l'énergie de corrélation avec le code avancé E2 est égale à la somme de carrés suivante : $IE2^2 + QE2^2$

Le logiciel de calcul qui contrôle le circuit de traitement de signal calcule alors les énergies de corrélation suivantes :

y1 = $(IE1^2+QE1^2)$ qui représente l'ordonnée du point D de la figure 8.
z1 = $(IL1^2+QL1^2)$ qui représente l'ordonnée du point F de la figure 8, l'asservissement étant réalisé de sorte que y1 = z1.
y2 = $(IE2^2+QE2^2)$ qui représente l'ordonnée du point G.
z2 = $(IL2^2+QL2^2)$ qui représente l'ordonnée du point H.

Pour réaliser l'asservissement, on calcule donc la différence des énergies de corrélation retard et avance pour le décalage d :

$$(y1\text{-}z1)/(y1\text{+}z1)$$

le terme $y1\text{+}z1$ étant un terme de normalisation; et on utilise cette différence pour contrôler la phase d'un oscillateur à commande numérique de phase 100 qui pilote un générateur de code local 102 ayant plusieurs sorties correspondant aux codes E2, E1, L1, L2.

Par ailleurs, comme à la figure 7, la boucle de porteuse est asservie à partir des signaux de corrélation utilisés pour l'asservissement de phase de code. Ici, on peut calculer une valeur $Arctg(IE1\text{+}IL1)/(QE1\text{+}QL1)$ pour s'en servir comme signal d'erreur pour commander l'oscillateur à commande numérique de phase 12.

Le microprocesseur de contrôle et de calcul de position GPS peut calculer un temps GPS T1 à un instant de mesure quelconque, lorsque la boucle est asservie; ce calcul est fait à partir de la lecture de la phase de l'oscillateur 100 à cet instant.

Il calcule aussi les énergies y1, z1, y2, z2 à partir des valeurs numériques de sortie des intégrateurs 80 à 96.

Enfin, il calcule, par la formule d'extrapolation ci-dessus, à partir de d, de y1, z1, y2, et z2, le temps T0 recherché qui pourra servir au calcul de position GPS exact corrigé de l'influence des multitrajets.

**Revendications**

1. Procédé d'élimination de l'influence des multitrajets dans un récepteur de positionnement par satellite, dans lequel on utilise une corrélation à l'aide d'au moins quatre codes pseudo-aléatoires E1, L1, E2, L2 répliques d'un code reçu d'un satellite, les codes E1 et L1 étant respectivement en avance et en retard d'une durée d par rapport à un code ponctuel P1 et les codes E2 et L2 étant respectivement en avance et en retard d'une durée k.d par rapport à un code ponctuel P2, **caractérisé en ce que**, en vue de déduire la position du récepteur à partir de la position temporelle du code reçu sans erreur due aux multitrajets, on effectue des mesures d'énergie de corrélation et de temps reçu d'une part avec les codes répliques E1, L1, avancé et retardé de d, d'autre part avec les codes répliques E2, L2 avancé et retardé de k.d, et on effectue à partir de ces deux ensembles de mesures, par extrapolation, le calcul de la position temporelle correspondant à k = 0, qui définit la position temporelle du code reçu, le calcul d'extrapolation consistant à trouver la position temporelle du point d'intersection de deux segments de droite définis par quatre couples d'une énergie de corrélation et d'un écart temporel correspondant.

2. Procédé selon la revendication 1, **caractérisé en ce que** les codes ponctuels P1 et P2 sont émis indépendamment l'un de l'autre, une première boucle d'asservissement étant produite pour asservir le code ponctuel P1 par un signal d'erreur représentant l'égalité des énergies de corrélation du code E1 et du code L1, et une deuxième boucle de corrélation étant produite pour asservir le code ponctuel P2 par un signal d'erreur représentant l'égalité des énergies de corrélation du code E2 et du code L2, **en ce qu'**on calcule un temps T1 d'après la position de code ponctuel P1 dans la première boucle, un temps T2 d'après la position de code ponctuel P2 dans la deuxième boucle, et un temps T0 corrigé correspondant au code du signal reçu du satellite, par la formule d'extrapolation $T0 = (kT1\text{ -}T2)/(k\text{-}1)$.

3. Procédé selon la revendication 2, **caractérisé en ce que** les deux boucles d'asservissement fonctionnent simultanément, avec deux générateurs de code différents produisant l'un les codes P1, E1 et L1, et l'autre les codes P2, E2 et L2, et **en ce que** les temps T1 et T2 sont calculés par lecture de signaux numériques à l'intérieur de chaque boucle à un même instant.

4. Procédé selon la revendication 2, **caractérisé en ce que** les deux boucles d'asservissement sont constituées pendant deux intervalles de temps successifs à l'aide d'un même circuit d'asservissement comportant un générateur de code produisant successivement d'abord une série de codes P1, E1, L1, le calcul du temps T1 étant fait à partir de la lecture de signaux numériques dans le circuit d'asservissement à un premier instant d'échantillonnage te1, puis une série de codes P2, E2, L2, le calcul du temps T2 étant fait d'abord en calculant un temps T'2 à partir de la lecture de signaux numériques dans le circuit d'asservissement à un deuxième instant d'échantillonnage te2, puis en soustrayant du temps T'2 l'intervalle de temps te2-te1 pour ramener le temps T2 à une valeur équivalente à celle qu'il aurait si les deux boucles d'asservissement fonctionnaient simultanément.

5. Procédé selon l'une des revendications 2 à 4, **caractérisé en ce que** l'on produit un code E1-L1 à partir des codes E1 et L1, un code E2-L2 à partir des codes E2 et L2, les asservissements étant réalisés de manière à tendre à ramener à zéro la fonction de corrélation F(E1-L1) entre le code E1-L1 et le code reçu d'un satellite, et la fonction de corrélation F(E2-L2) entre le code E2-L2 et le code reçu d'un satellite.

6. Procédé selon la revendication 1, **caractérisé en ce que** les deux codes P1 et P2 sont confondus en un seul code P, **en ce qu'**on établit une boucle d'asservissement à partir des codes E1 et L1 pour asservir le code P par un signal d'erreur représentant l'égalité des énergies de corrélation y1 et z1 entre le signal reçu et le code E1 d'une part, le signal reçu et le code L1 d'autre part, **en ce qu'**on mesure les énergies de corrélation y2 et z2 entre le signal reçu et les codes E2 et L2 respectivement, on calcule un temps T1 d'après la position du code ponctuel P à partir de signaux numériques prélevés dans la boucle d'asservissement à un instant d'échantillonnage, et on calcule un temps T0 non affecté d'erreur de multitrajet par la formule d'extrapolation :

$$T0 = T1 - d(y2 - z2)/(y1 + z1 - y2 - z2)$$

7.  Récepteur de signaux de positionnement par satellite, qui comprend des moyens pour générer quatre codes pseudo-aléatoires E1, L1, E2, L2, répliques d'un code reçu d'un satellite, les codes E1 et L1 étant respectivement en avance et en retard d'une durée d sur un code ponctuel P1 et les codes E2 et L2 étant respectivement en avance et en retard d'une durée k.d par rapport à un code ponctuel P2, k différent de 1 et de 0, **caractérisé en ce qu'**il comporte en outre des moyens de corrélation entre le code reçu et les codes répliques, des moyens de mesure d'énergies de corrélation et d'au moins un temps reçu, ces moyens utilisant d'une part les codes répliques E1 et L1, d'autre part les codes répliques E2 et L2, et des moyens pour effectuer à partir de ces deux ensembles de mesures un calcul par simple extrapolation d'une position temporelle correspondant à k = 0, qui définit la position temporelle du code reçu.

**Patentansprüche**

1.  Verfahren zum Beseitigen des Einflusses der Mehrfachdurchläufe in einem Empfänger zur satellitengestützten Positionsbestimmung, bei dem eine Korrelation mit Hilfe von wenigstens vier pseudozufälligen Codes E1, L1, E2, L2, die aus einem von einem Satelliten empfangenen Code repliziert werden, verwendet wird, wobei die Codes E1 und L1 um eine Dauer d in bezug auf einen punktförmigen Code P1 voreilen bzw. nacheilen und die Codes E2 und L2 um eine Dauer k d in bezug auf einen punktförmigen Code P2 voreilen bzw. nacheilen, **dadurch gekennzeichnet, daß** für eine Ableitung der Position des Empfängers aus der zeitlichen Position des empfangenen Codes ohne durch Mehrfachdurchläufe bedingten Fehler Messungen der Energie der Korrelation und der Zeit, die einerseits mit den replizierten Codes E1, L1, die um d voreilen bzw. nacheilen, und andererseits mit den replizierten Codes E2, L2, die um k d voreilen bzw. nacheilen, empfangen wird, ausgeführt werden und daß anhand dieser zwei Gesamtheiten von Meßwerten durch Extrapolation die Berechnung der zeitlichen Position, die k = 0 entspricht und die die zeitliche Position des empfangenen Codes definiert, ausgeführt wird, wobei die Extrapolationsberechnung darin besteht, die zeitliche Position des Schnittpunkts zweier Geradensegmente, die durch vier Paare einer Korrelationsenergie und eines entsprechenden zeitlichen Abstandes definiert sind, zu ermitteln.

2.  Verfahren nach Anspruch 1, **dadurch gekennzeichnet, daß** die punktförmigen Codes P1 und P2 unabhängig voneinander gesendet werden, wobei eine erste Regelungsschleife erzeugt wird, um den punktförmigen Code P1 durch ein Fehlersignal, das die Gleichheit der Korrelationsenergien des Codes E1 und des Codes L1 repräsentiert, zu regeln, und eine zweite Korrelationsschleife erzeugt wird, um den punktförmigen Code P2 durch ein Fehlersignal, das die Gleichheit der Korrelationsenergien des Codes E2 und des Codes L2 repräsentiert, zu regeln, und daß eine Zeit T1 nach der Position des punktförmigen Codes P1 in der ersten Schleife, eine Zeit T2 nach der Position des punktförmigen Codes P2 in der zweiten Schleife und eine korrigierte Zeit T0, die dem Code des vom Satelliten empfangenen Signals entspricht, durch die Extrapolationsformel T0 = (kT1 - T2)/(k - 1) berechnet werden.

3.  Verfahren nach Anspruch 2, **dadurch gekennzeichnet, daß** die zwei Regelungsschleifen gleichzeitig mit zwei verschiedenen Code-Generatoren arbeiten, wovon einer die Codes P1, E1 und L1 und der andere die Codes P2, E2 und L2 erzeugt, und daß die Zeiten T1 und T2 durch Lesen der digitalen Signale in jeder Schleife zum selben Zeitpunkt berechnet werden.

4.  Verfahren nach Anspruch 2, **dadurch gekennzeichnet, daß** die zwei Regelungsschleifen während zweier aufeinanderfolgender Zeitintervalle mit Hilfe derselben Regelungsschaltung gebildet werden, die einen Codegenerator enthält, der nacheinander zunächst eine Reihe von Codes P1, E1, L1 erzeugt, wobei die Berechnung der Zeit T1 anhand des Lesens der digitalen Signale in der Regelungsschaltung zu einem ersten Abtastzeitpunkt te1 erfolgt, und dann eine Reihe von Codes P2, E2, L2 erzeugt, wobei die Berechnung der Zeit T2 zunächst durch Berechnen einer Zeit T'2 anhand des Lesens der digitalen Signale in der Regelungsschaltung zu einem zweiten Abtastzeitpunkt te2 und dann durch Subtrahieren des Zeitintervalls te2 - te1 von der Zeit T'2 erfolgt, um die Zeit T2 auf einen Wert einzustellen, der mit jenem äquivalent ist, der vorläge, wenn die beiden Regelungsschleifen gleichzeitig arbeiten würden.

5. Verfahren nach einem der Ansprüche 2 bis 4, **dadurch gekennzeichnet, daß** ein Code E1-L1 anhand der Codes E1 und L1 erzeugt wird, ein Code E2-L2 anhand der Codes E2 und L2 erzeugt wird, wobei die Regelungen in der Weise ausgeführt werden, daß versucht wird, die Korrelationsfunktion F (E1-L1) zwischen dem Code E1-L1 und dem von einem Satelliten empfangenen Code und die Korrelationsfunktion F(E2-L2) zwischen dem Code E2-L2 und dem von einem Satelliten empfangenen Code auf null zurückzustellen.

6. Verfahren nach Anspruch 1, **dadurch gekennzeichnet, daß** die beiden Codes P1 und P2 mit einem einzigen Code P zusammenfallen, daß anhand der Codes E1 und L1 eine Regelungsschleife aufgebaut wird, um den Code P durch ein Fehlersignal, das die Gleichheit der Korrelationsenergien y1 und z1 zwischen dem empfangenen Signal und dem Code E1 einerseits und dem empfangenen Signal und dem Code L1 andererseits darstellt, zu regeln, daß die Korrelationsenergien y2 und z2 zwischen dem empfangenen Signal und den Codes E2 bzw. L2 gemessen werden und daß eine Zeit T1 nach der Position des punktförmigen Codes P anhand der digitalen Signale, die in der Regelungsschleife zu einem Abtastzeitpunkt abgegriffen werden, berechnet wird und eine Zeit T0, die nicht durch Mehrfachdurchlauf-Fehler beeinflußt ist, durch die folgende Extrapolationsformel berechnet wird:

$$T0 = T1 - d(y2 - z2)/(y1 + z1 - y2 - z2)$$

7. Empfänger für Signale zur satellitengestützten Positionsbestimmung, der Mittel zum Erzeugen von vier pseudozufälligen Codes E1, L1, E2 und L2, die aus einem von einem Satelliten empfangenen Code repliziert werden, enthält, wobei die Codes E1 und L1 um eine Dauer d in bezug auf einen punktförmigen Code P1 voreilen bzw. nacheilen und die Codes E2 und L2 um eine Dauer $k \cdot d$ in bezug auf einen punktförmigen Code P2 voreilen bzw. nacheilen, wobei k verschieden von 1 und von 0 ist, **dadurch gekennzeichnet, daß** er außerdem Mittel zum Bilden einer Korrelation zwischen dem empfangenen Code und den replizierten Codes, Mittel zum Messen der Korrelationsenergien und wenigstens einer empfangenen Zeit, welche einerseits die replizierten Codes E1 und L1 und andererseits die replizierten Codes E2 und L2 verwenden, und Mittel, die anhand dieser beiden Gesamtheiten von Meßwerten eine Berechnung durch einfache Extrapolation einer k = 0 entsprechenden und die zeitliche Position des empfangenen Codes definierenden zeitlichen Position ausführen, umfaßt.

**Claims**

1. Method to eliminate the influence of multiple paths in a receiver for positioning by satellite in which there is used a correlation by means of at least four pseudo-random codes E1, L1, E2, L2 which are the replicas of a code received from a satellite, the codes E1 and L1 being respectively early and late by a duration d with respect to a punctual code P1 and the codes E2 and L2 being respectively early and late by a duration k.d with respect to a punctual code P2 **characterized in that**, in order to deduce the position of the receiver from the temporal position of the code received without error due to the multiple paths, measurements are made of correlation energy and of received time, firstly with the replica codes E1, L1 that are early and late by d, and secondly with the replica codes E2, L2 that are early and late by k.d and, on the basis of these two sets of measurements, a computation is carried out, by extrapolation, of the temporal position corresponding to k=0 that defines the temporal position of the received code the extrapolation computation consisting in finding the temporal position of the point of intersection of two straight line segments defined by four pairs of a correlation energy and of a corresponding temporal discrepancy.

2. Method according to Claim 1, **characterized in that** the punctual codes P1 and P2 are emitted independently of each other, a first servo-control loop being produced to servo-control the punctual code P1 by an error signal representing the equality of the energy values of correlation of the code E1 and of the code L1, and a second correlation loop being produced to servo-link the punctual code P2 by an error signal representing the equality of the energy values of correlation of the code E2 and of the code L2, and **in that** a time T1 is computed from the position of the punctual code P1 in the first loop, a time T2 is computed from the position of the punctual code P2 in the second loop, and a corrected time T0 corresponding to the code of the signal received from the satellite is computed by the extrapolation formula T0=(kT1-T2)/(k-1).

3. Method according to Claim 2, **characterized in that** the two servo-control loops work simultaneously, with two different code generators producing one of the codes P1, E1 and L1, and the other the codes P2, E2 and L2, and **in that** the times T1 and T2 are computed by the reading of digital signals within each loop at one and the same instant.

4. Method according to Claim 2, **characterized in that** the two servo-control loops are constituted during two successive time intervals by means of one and the same servo-control circuit comprising a code generator successively producing first of all a series of codes P1, E1, L1, the computation of the time T1 being done from the reading of digital signals in the servo-control circuit at a first sampling instant te1, and then a series of codes P2, E2, L2, the computation of the time T2 being done first of all by computing a time T'2 from the reading of digital signals in the servo-control circuit at a second sampling instant te2, and then by subtracting, from the time T'2, the time interval te2-te1 to reduce the time T2 to a value equivalent to the value it would have had if the two servo-control loops were to work simultaneously.

5. Method according to one of Claims 2 to 4, **characterized in that** a code E1-L1 is produced from the codes E1 and L1, a code E2-L2 is produced from the codes E2 and L2, the servo-controls being set up so as to tend to reduce to zero the function of correlation F(E1-L1) between the code E1-L1 and the code received from a satellite and the function of correlation F(E2-L2) between the code E2-L2 and the code received from a satellite.

6. Method according to Claim 1, **characterized in that** the two codes P1 and P2 are merged into a single code P, **in that** a servo-control loop is set up on the basis of the codes E1 and L1 to servo-control the code P by an error signal representing the equality of the energy values of correlation y1 and z1 between the received signal and the code E1 on the one hand and the received signal and the code L1 on the other hand, **in that** the energy values of correlation y2 and z2 between the received signal and the codes E2 and L2 respectively are measured, a time T1 is computed from the position of the punctual code P on the basis of digital signals sampled in the servo-control loop at a sampling instant, and a time T0 not affected by multiple-path error is computed by the extrapolation formula:

$$T0=T1-d(y2-z2) / (y1+z1-y2-z2).$$

7. Receiver for positioning signals by satellite which comprises means to generate four pseudo-random codes E1, L1, E2, L2 that are replicas of a code received from a satellite, the codes E1 and L1 being respectively early and late by a duration d with respect to a punctual code P1 and the codes E2 and L2 being respectively early and late by a duration k.d with respect to a punctual code P2, k being different from 1 and 0, **characterized in that** it further comprises means of correlation between the received code and the replica codes, means for the measurement of energy values of correlation and at least one received time, these means using firstly the replica codes E1 and L1 and secondly the replica codes E2 and L2 and means for the performance, on the basis of these two sets of measurements, of a computation by simple extrapolation of a temporal position corresponding to k=0 that defines the temporal position of the received code.

EP 0 779 518 B1

ÉNERGIE DE
CORRÉLATION

ÉCART TEMPOREL
ENTRE CODES

−T   0   +T

FIG.1

ÉNERGIE

F(E)   −d  +d   F(P)

F(L)

ÉCART ENTRE
CODE REÇU
ET CODE P

(−d−T)   −T   0   T   d+T

FIG.2

F(E)−F(L)

F(E)−F(L)

F(P)

ÉCART ENTRE
CODE REÇU
ET CODE P

(−d−T)   −T   T   d+T

FIG.3

13

FIG.4

FIG.5

FIG.6

FIG.8

FIG.7

SIGNAL D'ERREUR DE CORRÉLATION

24 — NCO

POUR CALCULER T1

$$\frac{Ip1.Id1 + Qp1.Qd1}{Ip1^2 + Qp1^2}$$

25

P1    E1-L1

10    18

CAN    I

26    28    Ip1

30    32    Qp1

20    Q

34    36    Id1

14    cos φ    sin φ    16    38    40    Qd1

φ    Ip2

12    NCO    Qp2

Id2

Qd2

46    P2    E2-L2

50

CALCUL D'EXTRA-POLATION

μP    T1

T2

T0

Arctg(Qp1/Ip1)

$$\frac{Ip2.Id2 + Qp2.Qd2}{Ip2^2 + Qp2^2}$$

POUR CALCULER T2

48    NCO

SIGNAL D'ERREUR DE PHASE DE CODE

SIGNAL D'ERREUR DE PHASE DE PORTEUSE

EP 0 779 518 B1

FIG.9